# FASCICULE DE BREVET EUROPEEN

(11) **EP 1 602 994 B1**
(45) Date de publication et mention de la délivrance du brevet: **15.07.2009**
(21) Numéro de dépôt: 05291052.8
(22) Date de dépôt: 17.05.2005
(51) Int. Cl.: G05D 1/06

(54) **Procédé et dispositif de sécurisation d'un vol à basse altitude d'un aéronef**
Verfahren und Vorrichtung zur Sicherung eines Flugzeuges während eines Tieffluges
Method and system for providing security for an aircraft during low altitude flight

(30) Priorité: 18.05.2004 FR 0405373
(43) Date de publication de la demande: 07.12.2005
(73) Titulaire: AIRBUS France, 31060 Toulouse (FR)
(72) Inventeur: Artini, Franck, 31000 Toulouse (FR); Demortier, Jean-Pierre, 32200 Maurens (FR); Bouchet, Christophe, 31000 Toulouse (FR); Espinasse, Jacques, 31820 Pibrac (FR); Strongman, Edward, 31530 Bretx (FR)
(74) Mandataire: Hauer, Bernard

(56) Documents cités:
- EP-A- 0 565 399
- EP-A- 0 775 953
- FR-A- 2 813 963

## Description

La présente invention concerne un procédé et un dispositif de sécurisation d'un vol à basse altitude d'un aéronef qui est guidé le long d'une trajectoire de vol comprenant une trajectoire latérale et une trajectoire verticale.

Bien que non exclusivement, la présente invention s'applique plus particulièrement à un avion de transport militaire qui présente un rapport poussée/poids faible et une forte inertie, et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer. Une telle trajectoire de vol à basse altitude est donc située à une hauteur du terrain prédéterminée, par exemple 500 pieds (environ 150 mètres).

En raison de cette proximité avec le sol, il est nécessaire que la trajectoire de vol soit compatible avec les capacités de l'aéronef, c'est-à-dire que ce dernier soit en mesure de la suivre. En effet, une déviation excessive par rapport à cette trajectoire de vol pourrait avoir des conséquences catastrophiques, avec notamment un risque important de collision avec le terrain survolé ou avec un ouvrage ou un élément situé sur ledit terrain.

Par ailleurs, par le document EP-A-0 775 953, on connaît un procédé de pilotage d'un aéronef en vol à basse altitude. Ce procédé comprend les étapes suivantes :
- la détermination par le pilote de l'aéronef, de buts sur un écran cartographique, de manière à définir un plan de vol découpé en segments, chaque segment étant défini entre deux buts ;
- la détermination par un calculateur dans l'aéronef, de trajectoires horizontales, le long des segments ;
- la détermination du profil de terrain à survoler, par le calculateur, ledit profil de terrain étant défini à partir d'un ensemble de points les plus hauts situés sur une trajectoire entre deux buts ; et
- la détermination d'une série de droites, de pentes qui tangentent le profil de terrain, lesdites droites définissant les consignes de vol en trajectoire verticale.

En outre, par le document FR-A-2 813 963, on connaît un dispositif d'aide à la navigation aérienne, destiné à être embarqué sur un aéronef. Ce dispositif comprend :
- une entrée pour recevoir des paramètres statiques et dynamiques de l'aéronef ;
- un module d'aide agencé pour utiliser lesdits paramètres et une base de données du relief du terrain survolé, afin d'extraire des informations de relief sur un domaine exploré tri-dimensionnel, défini en fonction de la trajectoire de l'aéronef, et d'élaborer d'éventuelles informations d'alerte, correspondant à un risque de collision entre l'aéronef et le relief, en fonction d'une trajectoire prédite de l'aéronef ; et
- un module de visualisation, agencé pour coopérer avec le module d'aide, afin d'afficher une représentation bi-dimensionnelle du relief sur un domaine visualisé, et d'y insérer une signalisation d'alertes éventuelles.

De plus, le module d'aide est agencé pour établir un état de phase d'atterrissage et/ou de décollage détecté, ainsi que pour coopérer avec le module de visualisation afin d'inhiber sélectivement la signalisation éventuelle d'alertes sur des parties définies du domaine visualisé, en phase d'atterrissage et/ou de décollage.

En outre, par le document EP-A-O 565 399, on connaît un dispositif d'aide à la navigation aérienne. Ce dispositif comporte :
- une mémoire de masse apte à stocker une base de données représentant au moins une partie substantielle du globe terrestre, sous la forme d'un découpage comprenant un maillage sur au moins un niveau, chaque maille étant associée à au moins une donnée représentant l'altitude maximale à l'intérieur de la maille, et au moins un index permettant l'accès rapide à des jeux de mailles contiguës que contient ladite base de données, en fonction d'un adressage à deux coordonnées horizontales ;
- une entrée pour recevoir des indications d'état, représentant la position de l'aéronef, avec deux composantes horizontales et l'altitude, et les vecteurs vitesse et accélération de l'aéronef, ainsi que des indications de commande provenant du poste de commande ;
- une mémoire rapide de travail ;
- des moyens de gestion de la base de données propres, en fonction desdites composantes horizontales de la position de l'aéronef, à extraire et transférer en mémoire rapide une carte locale temporaire, à partir de laquelle est définie une enveloppe en altitude du terrain, dans la zone où évolue l'aéronef ; et
- des moyens de traitement anti-collision pour :
   ■ traiter lesdites informations d'état, afin d'établir une pluralité de points prédits de la trajectoire de l'aéronef ;
   ■ en chaque point prédit, comparer le contour d'un domaine de protection autour de l'aéronef, à l'enveloppe d'altitude dans la partie correspondante de ladite carte locale ; et
   ■ établir une alarme si la relation entre le domaine de protection et l'enveloppe en altitude satisfait une première condition qui est définie au moins en partie par lesdites indications de commande.

La présente invention a pour objet de remédier aux inconvénients précités. Elle concerne un procédé de sécurisation d'un vol à basse altitude d'un aéronef (qui est guidé le long d'une trajectoire de vol comprenant une trajectoire latérale et une trajectoire verticale), qui permet de supprimer tout risque de collision de l'aéronef avec le terrain survolé.

A cet effet, selon l'invention, ledit procédé selon lequel :
- on détermine des conditions de vol courantes ;
- on réalise, à l'aide desdites conditions de vol courantes, une fonction de surveillance globale et autonome dudit vol à basse altitude de l'aéronef, permettant de conserver l'intégrité dudit aéronef lors dudit vol ; et
- on présente à un opérateur les résultats de la fonction de surveillance ainsi réalisée,
est remarquable en ce que, pour réaliser ladite fonction de surveillance, on réalise au moins une surveillance pour vérifier la compatibilité d'une trajectoire verticale pré-calculée avec des performances théoriques mises à jour de l'aéronef, et en ce que, pour réaliser cette surveillance :
- on forme, à l'aide de paramètres de calcul concernant l'aéronef et de paramètres extérieurs qui sont mesurés et remis à jour en permanence, un profil de protection qui dépend de la capacité de l'aéronef à effectuer une ressource à vitesse et facteur de charge constants, puis une montée à vitesse constante et à pente maximale ;
- on projette sur la trajectoire verticale ce profil de protection à partir de la position courante de l'aéronef, en aval, le long de ladite trajectoire verticale ; et
- on vérifie si ledit profil de protection ainsi projeté intercepte ladite trajectoire verticale, et on émet un signal pour avertir le pilote lorsque ledit profil de protection intercepte ladite trajectoire verticale.

Ainsi, comme grâce à l'invention la fonction de surveillance :
- est globale, elle permet de supprimer les risques potentiels de collision de l'aéronef avec le terrain survolé ; et
- est autonome, elle est très discrète et n'est donc pas facilement détectable.

Plus précisément, ladite fonction de surveillance est globale en ce qu'elle permet de détecter tous les comportements anormaux ou non prévus d'une fonction active de vol à basse altitude, de type usuel, qui est utilisée pour guider l'aéronef le long de la trajectoire de vol, et autonome car les moyens qu'elle met en oeuvre sont totalement décorrélés de cette fonction active. Associée à ladite fonction active, la fonction de surveillance conforme à l'invention permet d'obtenir un niveau de sécurité en vol à basse altitude supérieur à celui de cette fonction active seule.

Selon l'invention, ladite fonction de surveillance globale et autonome comporte, de plus, une pluralité de fonctions qui participent toutes, à leur niveau, au maintien de l'intégrité de l'aéronef lors d'un vol à basse altitude.

Avantageusement, ladite fonction de surveillance comprend une première surveillance pour vérifier la compatibilité de la trajectoire de vol avec le terrain à survoler, c'est-à-dire pour vérifier si la trajectoire de vol est sûre par rapport audit terrain.

De façon avantageuse, ladite première surveillance consiste à vérifier que la trajectoire verticale de la trajectoire de vol, translatée verticalement vers le bas d'une hauteur de garde prédéterminée, n'intercepte pas (ou ne touche pas) le terrain.

De préférence, pour réaliser cette première surveillance, on effectue pour chaque abscisse curviligne de la trajectoire latérale de la trajectoire de vol, les opérations suivantes :
- on détermine l'altitude la plus élevée sous une surface d'incertitude liée à ladite abscisse curviligne ;
- on augmente cette altitude de ladite hauteur de garde pour former une altitude de sécurité ; et
- on vérifie que l'altitude de ladite abscisse curviligne est supérieure à ladite altitude de sécurité.

Avantageusement, ladite fonction de surveillance comprend une deuxième surveillance pour vérifier que ladite trajectoire de vol est continue et manoeuvrable par l'aéronef. Cette deuxième surveillance permet d'éviter par exemple que, si une transition en arc de cercle entre deux segments rectilignes de la trajectoire de vol, est calculée avec un rayon trop petit par rapport à la vitesse de consigne (et le facteur de charge maximal admissible), l'aéronef ne puisse tenir ce rayon et vienne percuter le relief environnant.

De façon avantageuse, pour réaliser ladite deuxième surveillance, on effectue, pour chaque abscisse curviligne de la trajectoire latérale de la trajectoire de vol, les opérations suivantes :
- on détermine les rayons de courbure latéral et vertical correspondant respectivement à la trajectoire latérale et à la trajectoire verticale, à ladite abscisse curviligne ;
- on détermine à partir de ces rayons de courbure latéral et vertical :
   . un premier facteur de charge correspondant à un facteur de charge statique dû à un virage à pente constante ; et
   . un second facteur de charge correspondant à un facteur de charge vertical dû à une transition verticale à route constante ; et
- on vérifie que lesdits premier et second facteurs de charge restent inférieurs à des valeurs maximales prédéterminées.

De plus, avantageusement, ladite fonction de surveillance comprend une troisième surveillance pour vérifier que la poussée de l'aéronef nécessaire au maintien de la pente et de la vitesse de consigne telles que définies pour la trajectoire de vol, reste inférieure à la poussée maximale disponible en cas de panne d'un moteur de l'aéronef..

Comme précisé ci-dessous, grâce à cette troisième surveillance, on peut détecter en amont une incompatibilité de pente (consigne de vol) avec les performances prédites de l'aéronef. Cette troisième surveillance est donc une surveillance en amont (c'est-à-dire effectuée devant l'aéronef) qui permet de détecter une erreur (commise sur la trajectoire verticale construite) issue, soit d'un modèle de pentes, soit d'un algorithme d'optimisation, qui sont utilisés pour construire ladite trajectoire verticale. La pente est donc fonction des performances maximales prédites de l'aéronef.

En outre, de façon avantageuse, lorsque ladite surveillance détecte une incompatibilité telle que précitée, on corrige automatiquement la trajectoire verticale à l'avant de l'aéronef de manière à supprimer cette incompatibilité, ce qui permet d'éviter tout risque de collision de l'aéronef avec le terrain ou d'abandonner la mission à cause de cette erreur (disponibilité opérationnelle meilleure).

Par ailleurs, avantageusement, ladite fonction de surveillance comprend une cinquième surveillance pour vérifier la compatibilité de la trajectoire verticale avec des performances réelles de l'aéronef.

De façon avantageuse, pour réaliser ladite cinquième surveillance :
- on détermine une première pente maximale qui représente la pente maximale à laquelle peut voler l'aéronef dans les conditions courantes de vol avec un moteur en panne ;
- on détermine une seconde pente maximale qui représente la pente maximale à laquelle peut voler l'aéronef dans les conditions courantes de vol avec tous ses moteurs en fonctionnement ;
- on détermine une pente de consigne permettant à l'aéronef de voler suivant ladite trajectoire de vol ; et
- on vérifie que ladite pente de consigne est compatible avec lesdites première et seconde pentes maximales.

De préférence, on détermine lesdites première et seconde pentes maximales à partir de la pente totale courante de l'aéronef.

En outre, avantageusement, ladite fonction de surveillance comprend une sixième surveillance pour détecter toute déviation excessive de la position de l'aéronef par rapport à ladite trajectoire de vol.

Par ailleurs, de façon avantageuse, lesdites conditions courantes du vol comportent les conditions météorologiques courantes et des caractéristiques courantes de l'aéronef.

En outre, avantageusement, on met en oeuvre une fonction de sécurisation de la trajectoire de vol lors de sa construction.

Selon l'invention, pour former la trajectoire verticale de ladite trajectoire de vol :
- on détermine, à partir d'un profil de terrain relatif à un terrain à survoler par l'aéronef, un profil de terrain sécurisé qui est tel que, le long de la trajectoire latérale de la trajectoire de vol, on prend en compte comme élévation du terrain, l'élévation qui est la plus haute sous une surface d'incertitude, à laquelle on ajoute une hauteur de garde prédéterminée ; et
- on forme ladite trajectoire verticale à partir dudit profil de terrain sécurisé.

Ainsi, grâce à l'invention, on détermine la trajectoire verticale (ou profil de vol) de la trajectoire de vol, non pas directement à partir du profil de terrain qui est de préférence issu d'une base de données numérique et qui présente une certaine marge d'erreur, mais à partir d'un profil de terrain sécurisé qui tient compte, comme précisé ci-dessous, d'une pluralité de marges d'erreur ou incertitudes existantes, dont celle relative à la base de données. Ceci permet d'obtenir une trajectoire verticale limitant le risque de collision de l'aéronef avec le sol, tout en autorisant un suivi du terrain à basse altitude. De façon avantageuse, ladite surface d'incertitude dépend d'une marge d'erreur concernant la position de l'aéronef, d'une marge d'erreur concernant ledit profil de terrain, et d'une marge d'erreur concernant le guidage de l'aéronef le long d'une trajectoire. De plus, avantageusement, ladite surface d'incertitude est centrée par rapport à la trajectoire latérale de la trajectoire de vol.

La présente invention concerne également un dispositif de sécurisation d'un vol à basse altitude d'un aéronef qui est guidé le long d'une trajectoire de vol.

Selon l'invention, ledit dispositif du type comportant :
- des sources d'informations susceptibles de déterminer des conditions de vol courantes ;
- une unité de surveillance pour réaliser, à l'aide desdites conditions de vol courantes, une fonction de surveillance globale et autonome dudit vol à basse altitude de l'aéronef, permettant de conserver l'intégrité dudit aéronef lors dudit vol ; et
- des moyens pour présenter à un opérateur les résultats de la fonction de surveillance réalisée par ladite unité de surveillance,
est remarquable en ce que ladite unité de surveillance comporte un moyen de surveillance pour vérifier la compatibilité d'une trajectoire verticale pré-calculée avec des performances théoriques mises à jour de l'aéronef, et en ce que ce moyen de surveillance comporte pour réaliser cette surveillance :
- un moyen pour former, à l'aide de paramètres de calcul concernant l'aéronef et de paramètres extérieurs qui sont mesurés et remis à jour en permanence, un profil de protection qui dépend de la capacité de l'aéronef à effectuer une ressource à vitesse et facteur de charge constants, puis une montée à vitesse constante et à pente maximale ;
- un moyen pour projeter sur la trajectoire verticale ce profil de protection à partir de la position courante de l'aéronef, en aval, le long de ladite trajectoire verticale ; et
- un moyen pour vérifier si ledit profil de protection ainsi projeté intercepte ladite trajectoire verticale et pour émettre un signal avertissant le pilote lorsque ledit profil de protection intercepte ladite trajectoire verticale.

Dans un mode de réalisation préféré, ladite unité de surveillance comporte :
- un premier moyen de surveillance pour vérifier la compatibilité de la trajectoire de vol avec le terrain à survoler ;
- un deuxième moyen de surveillance pour vérifier que ladite trajectoire de vol est continue et manoeuvrable par l'aéronef ;
- un troisième moyen de surveillance pour vérifier que la poussée de l'aéronef nécessaire au maintien de la pente et de la vitesse de consigne telles que définies pour la trajectoire de vol, reste inférieure à la poussée maximale disponible en cas de panne d'un moteur de l'aéronef ;
- ledit moyen de surveillance précité (par exemple un quatrième moyen de surveillance) pour vérifier la compatibilité de la trajectoire verticale avec des performances théoriques mises à jour de l'aéronef ;
- un cinquième moyen de surveillance pour vérifier la compatibilité de la trajectoire verticale avec des performances réelles de l'aéronef ; et
- un sixième moyen de surveillance pour détecter toute déviation excessive de la position de l'aéronef par rapport à ladite trajectoire de vol.

En outre, avantageusement, ledit dispositif comporte, de plus :
- un moyen pour mettre en oeuvre une fonction de sécurisation de la trajectoire de vol lors de sa construction ; et/ou
- des moyens pour mettre à jour automatiquement ladite trajectoire de vol.

Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 et 3 sont deux graphiques permettant d'expliquer une surveillance particulière faisant partie de la fonction de surveillance globale conforme à l'invention.
Les figures 4 à 7 sont des graphiques permettant d'expliquer une autre surveillance particulière faisant partie de la fonction de surveillance globale conforme à l'invention.

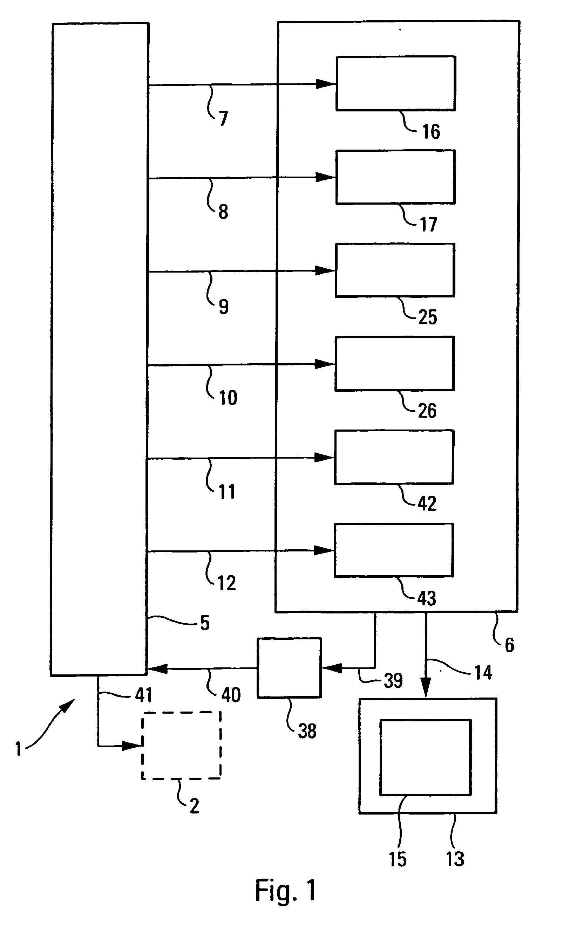

Le dispositif 1 conforme à l'invention et représenté schématiquement sur la figure 1 est destiné à la sécurisation d'un vol à basse altitude d'un aéronef A, en particulier un avion de transport militaire. A cet effet, ledit aéronef A est guidé, à l'aide d'un système de guidage usuel 2 représenté en traits interrompus sur la figure 1 et mettant en oeuvre une fonction usuelle et active de vol à basse altitude. Ledit système de guidage 2 permet de guider l'aéronef A le long d'une trajectoire de vol TO, comprenant une trajectoire latérale TL et une trajectoire verticale TV (ou profil de vol).

Dans un mode de réalisation préféré, ladite trajectoire de vol TO est une trajectoire dite "à la ficelle" qui est constituée de segments rectilignes, dont les transitions latérales et verticales sont des arcs de cercle à rayons constants qui sont situés à des abscisses curvilignes et qui sont issus de considérations de vitesse de consigne et de facteurs de charge maximaux admissibles. Cette trajectoire de vol TO est une trajectoire anticipée, déterminée à l'aide de performances de montée et de descente prédites. De plus, elle est calculée à l'aide d'une base de données numérique du terrain, et épouse, au mieux et au plus près, la configuration du relief 3 du terrain 4 survolé.

Selon l'invention, ledit dispositif 1 comporte :
- des sources d'informations 5 usuelles, qui sont susceptibles, notamment, de déterminer des conditions de vol courantes, à savoir en particulier les conditions météorologiques courantes (vent, température) et des caractéristiques courantes (vitesse, masse, ...) de l'aéronef A ;
- une unité de surveillance 6 précisée ci-dessous, qui est reliée par des liaisons 7 à 12 (susceptibles d'être regroupées en une liaison globale unique) auxdites sources d'informations 5 et qui est destinée à réaliser, à l'aide desdites conditions de vol courantes notamment, une fonction de surveillance globale et autonome dudit vol à basse altitude de l'aéronef A, permettant de conserver l'intégrité dudit aéronef A lors dudit vol ; et
- des moyens 13 usuels, qui sont reliés par une liaison 14 à ladite unité de surveillance 6, pour présenter à un opérateur, en les affichant par exemple sur un écran de visualisation 15, les résultats de la fonction de surveillance mise en oeuvre par ladite unité de surveillance 6.

Ladite unité de surveillance 6 comporte un moyen de surveillance 16 (relié à la liaison 7) pour vérifier la compatibilité de la trajectoire de vol TO avec le terrain 4 à survoler.

La surveillance mise en oeuvre par ce moyen de surveillance 16 consiste à vérifier que la trajectoire verticale TV de la trajectoire de vol TO, translatée verticalement vers le bas d'une hauteur de garde HG prédéterminée, n'intercepte pas (c'est-à-dire ne touche pas) le terrain 4.

Pour ce faire, ledit moyen de surveillance 16 effectue pour chaque abscisse curviligne (qui est située par définition au niveau de la transition entre deux segments rectilignes successifs) de la trajectoire latérale TL de la trajectoire de vol TO, les opérations suivantes :
- il détermine l'altitude la plus élevée sous une surface d'incertitude liée à ladite abscisse curviligne ;
- il augmente cette altitude de ladite hauteur de garde HG pour former une altitude de sécurité ; et
- il vérifie que l'altitude de ladite abscisse curviligne est supérieure à ladite altitude de sécurité.

Dans un mode de réalisation particulier, ladite surface d'incertitude dépend :
- d'une incertitude concernant la position de l'aéronef A ;
- d'une incertitude concernant un profil de terrain utilisé pour construire ladite trajectoire de vol TO qui est construite, par exemple, par des moyens usuels faisant partie desdites sources d'informations 5 ; et
- d'une incertitude concernant le guidage de l'aéronef A le long d'une trajectoire à l'aide dudit système de guidage 2.

Par ailleurs, ladite unité de surveillance 6 comporte un moyen de surveillance 17 (relié à la liaison 8) pour vérifier que ladite trajectoire de vol TO est continue et manoeuvrable par l'aéronef A.

Comme indiqué précédemment, la trajectoire de vol TO est une succession dans les deux plans latéral et vertical de segments rectilignes, dont les transitions sont curvilignes et calculées en fonction d'une vitesse de consigne sélectionnée par le pilote et de considérations de facteur de charge maximal (ainsi que de marges destinées entre autres à prendre en compte des écarts de vent). La surveillance mise en oeuvre par le moyen de surveillance 17 consiste à vérifier que cette succession de segments est continûment dérivable, et que la trajectoire de vol TO reste manoeuvrable par l'aéronef A, c'est-à-dire que la trajectoire de vol TO calculée n'amène pas de dépassement de facteurs de charges admissibles, à savoir :
- de Nz qui est un facteur de charge statique (dû à un virage à pente constante) ; et
- de ΔNz qui est un facteur de charge en vertical en ligne droite (dû à une transition verticale, à route constante).

Cette surveillance permet d'éviter par exemple que, si une transition est calculée avec un rayon trop petit par rapport à la vitesse de consigne, l'aéronef A ne puisse tenir ce rayon et vienne percuter le relief environnant.

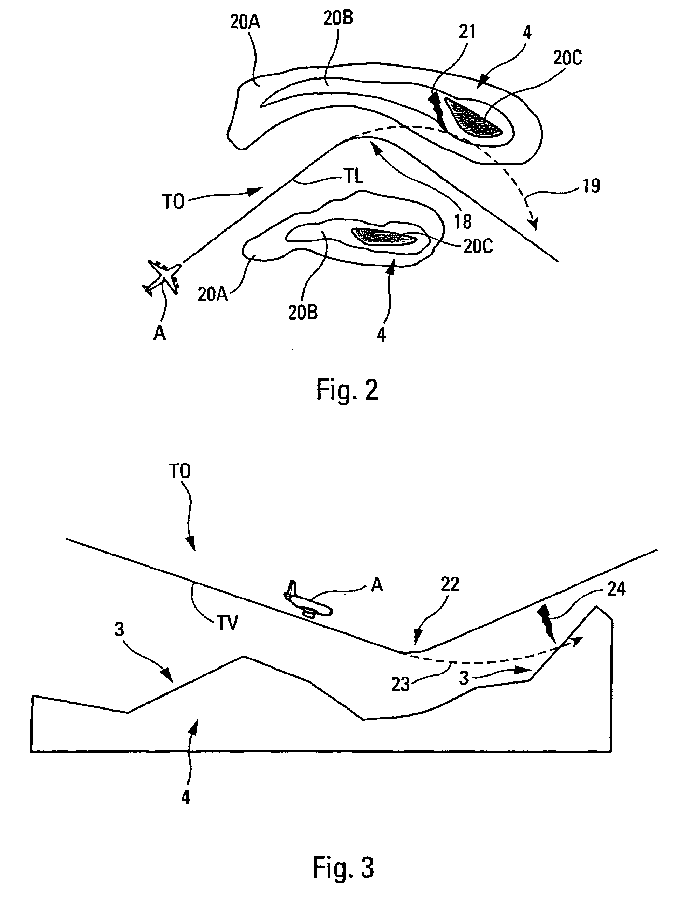

Sur la figure 2, on a représenté une telle situation dans le plan horizontal où la trajectoire latérale TL présente une transition en arc de cercle 18 avec un rayon trop petit. Cette trajectoire latérale TL n'est donc pas manoeuvrable par l'aéronef A. La trajectoire 19 réellement manoeuvrable est représentée en traits interrompus et présente un risque de collision avec le terrain 4 (présentant des zones 20A, 20B, 20C d'attitudes différentes, croissantes avec le noircissement), signalé par un signe caractéristique 21.

Sur la figure 3, on a représenté une telle situation dans le plan vertical où la trajectoire verticale TV présente une transition en arc de cercle 22 avec un rayon trop petit. Cette trajectoire verticale TV n'est donc pas manoeuvrable par l'aéronef A. La trajectoire 23 réellement manoeuvrable est représentée en traits interrompus et présente un risque de collision avec le relief 3 du terrain 4, comme rappelé par un signe caractéristique 24 sur cette figure 3.

Pour réaliser la surveillance précitée, ledit moyen de surveillance 17 effectue, pour chaque abscisse curviligne de la trajectoire latérale TL de la trajectoire de vol TO, les opérations suivantes :
- il détermine les rayons de courbure latéral et vertical correspondant respectivement à la trajectoire latérale TL et à la trajectoire verticale TV, à ladite abscisse curviligne ;
- il détermine à partir de ces rayons de courbure latéral et vertical :
   . un premier facteur de charge correspondant au facteur de charge statique Nz dû à un virage à pente constante ; et
   . un second facteur de charge correspondant au facteur de charge vertical ΔNz dû à une transition verticale à route constante ; et
- il vérifie que lesdits premier et second facteurs de charge Nz et ΔNz restent inférieurs à des valeurs maximales prédéterminées, sachant qu'il y a une mutuelle dépendance entre les deux plans horizontal et vertical : par exemple dans le cas d'un virage, le facteur de charge maximal en ressource latérale est diminué en correspondance.

Par ailleurs, ladite unité de surveillance 6 comporte un moyen de surveillance 25 (relié à la liaison 9) pour vérifier que la poussée de l'aéronef A nécessaire au maintien de la pente et de la vitesse de consigne telles que définies pour la trajectoire de vol TO, reste inférieure à la poussée maximale disponible en cas de panne d'un moteur de l'aéronef A.

Une telle surveillance permet de détecter en amont une incompatibilité de pente (consigne de vol) avec les performances prédites de l'aéronef A aux mêmes hypothèses de vol. Cette surveillance permet ainsi de détecter une erreur (commise sur la trajectoire verticale construite) issue, soit d'un modèle de pentes usuel (modèle de performances de l'aéronef), soit d'un algorithme d'optimisation usuel (algorithme de construction de la trajectoire à partir de pentes prédites susceptibles d'être volées), qui sont utilisés pour construire ladite trajectoire verticale TV.

Par ailleurs, ladite unité de surveillance 6 comporte un moyen de surveillance 26 (relié à la liaison 10) pour vérifier la compatibilité de la trajectoire verticale TV avec des performances théoriques mises à jour de l'aéronef A.

Le principe de cette surveillance est basé sur la projection d'un profil de protection 27 sur le profil vertical (ou trajectoire verticale TV) de la trajectoire de vol TO qui se présente devant l'aéronef A durant le vol. Ledit profil de protection 27 ne devra pas interférer avec le profil vertical pré-calculé. Une détection d'interférence mènera à une correction préventive de ladite trajectoire verticale TV. Le profil de protection 27 se présente donc comme la trajectoire ultime pour passer les crêtes de la trajectoire verticale TV.

Ledit profil de protection 27 est défini comme étant l'image de la capacité réelle de l'aéronef A à effectuer une ressource à vitesse et facteur de charge constants, puis à effectuer une montée à vitesse constante et pente maximale, et ceci pour les mêmes conditions théoriques que celles qui ont servi à pré-calculer la trajectoire verticale TV de la trajectoire de vol TO. La différence se situe au niveau de paramètres de calcul (masse, ...) concernant l'aéronef A et de paramètres extérieurs (température et vent), qui sont mesurés et remis à jour en permanence. De plus, l'évolution précise desdits paramètres peut être prise en compte pour corriger, si nécessaire, la trajectoire verticale TV devant l'aéronef A, comme précisé ci-dessous.

On notera que la surveillance mise en oeuvre par ledit moyen de surveillance 26 se différencie de surveillances usuelles, en ce qu'elle s'appuie sur la trajectoire verticale TV pré-calculée et non pas sur le relief (détecté par un radar ou fourni par une base numérique de données du terrain).

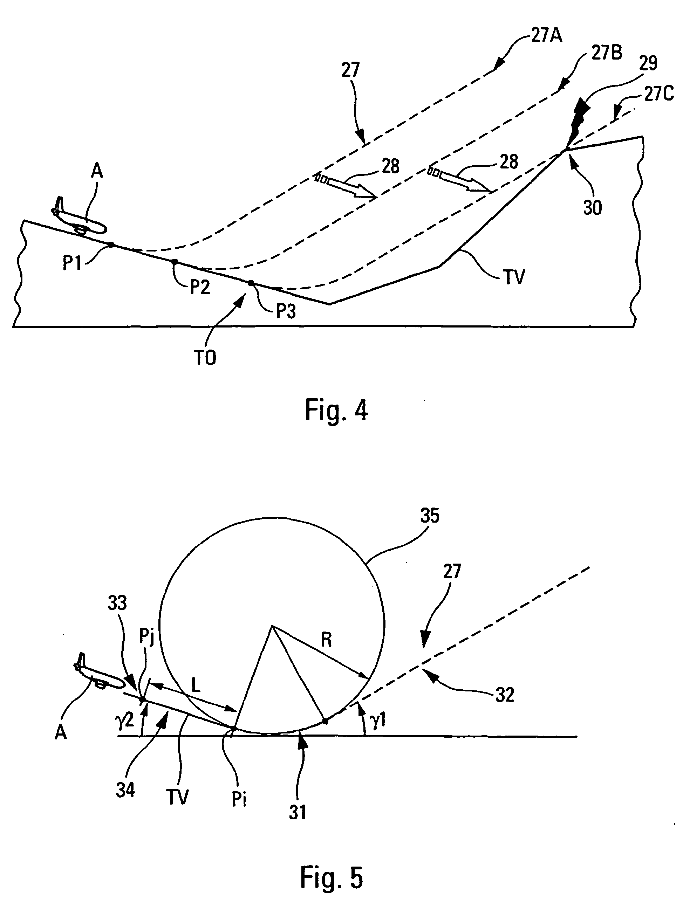

On a représenté sur la figure 4 plusieurs projections successives 27A, 27B, 27C du profil de protection 27 sur la trajectoire verticale TV, pour différentes positions successives P1, P2, P3 de l'aéronef A le long de ladite trajectoire verticale TV. La succession de ces projections est indiquée par des flèches 28.

La projection 27C met en évidence un problème signalé par un signe caractéristique 29 sur la figure 4, puisque le profil de protection 27 intercepte dans cette position la trajectoire verticale TV en un point 30.

Dans une variante de réalisation, le profil de protection 27 est lié à chaque crête de la trajectoire verticale TV. Ensuite, un calcul à rebours permet de trouver le point sur la trajectoire verticale TV à surveiller, à partir duquel l'aéronef A doit monter suivant les conditions de calcul dudit profil de protection. Dans la plupart des cas, ce point ne sera pas considéré, car il se trouvera au-delà de la trajectoire verticale TV dans le sens de vol. Les points à considérer sont alors ceux qui sont situés devant la pente, car la pente du profil de protection 27 est alors inférieure à la pente calculée, ce qui peut être une source de danger. La surveillance mise en oeuvre par le moyen de surveillance 26 consiste alors à déterminer l'écart relatif entre l'aéronef A et ce point, et ceci pour chaque crête de la trajectoire verticale TV.

Comme représenté sur la figure 5, le profil de protection 27 comporte une première partie 31 qui est une courbe de ressource, et une seconde partie 32 qui est un segment à pente maximale γ1. Ce profil de protection 27 s'applique en un point Pi d'un segment 33 de la trajectoire verticale TV, qui présente une pente de descente γ2.

Le profil de protection 27 peut comporter, de plus, un segment rectiligne 34 de pente γ2 et de longueur L, en amont du point Pi, pour débuter la projection dudit profil de protection 27 en un point Pj en amont. Ce segment rectiligne 34 permet de tenir compte du temps de réaction du pilote pour déclencher la manoeuvre de ressource. Bien entendu, si la manoeuvre de ressource est réalisée de façon automatique, la distance L est nulle et le profil de protection 27 ne comporte pas de segment rectiligne 34.

Dans un mode de réalisation simplifié, comme représenté sur la figure 5, la partie 31 est assimilée à un arc de cercle (partie d'un cercle 35) et présente donc un rayon R constant, bien que par définition la ressource se fasse à facteur de charge constant et à vitesse constante (on considère alors l'angle d'assiette maximal θmax petit) pour un aéronef lourd.

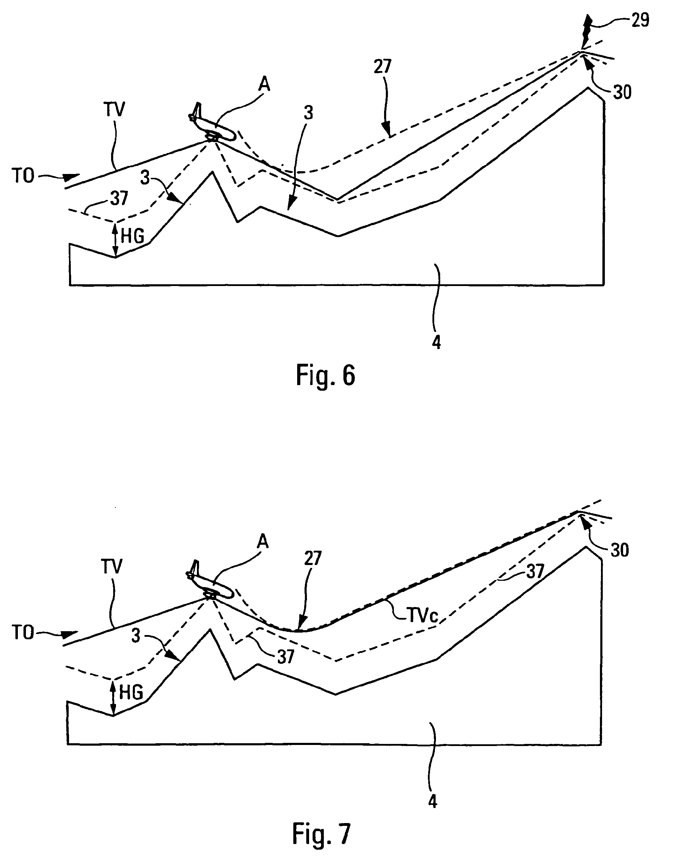

Sur la figure 6, on a représenté une application de la surveillance mise en oeuvre par le moyen de surveillance 26. Dans ce cas, la trajectoire verticale TV est déterminée à partir d'un profil de terrain 37 qui est situé pour des raisons de sécurité à une hauteur de garde HG au-dessus du relief 3 du terrain 4. Le profil de protection 27 intercepte la trajectoire verticale TV au point 30. A ce moment, le dispositif 1 peut émettre un signal pour avertir le pilote.

De plus, ledit dispositif 1 comporte un moyen 38 qui est relié par des liaisons 39 et 40 à l'unité de surveillance 6 et aux sources d'informations 5, pour mettre à jour automatiquement la trajectoire verticale TV, et former une trajectoire corrigée TVc, comme représenté sur la figure 7. Lesdites sources d'informations 5 peuvent transmettre la trajectoire verticale TVc ainsi mise à jour à des dispositifs utilisateurs, et notamment au système de guidage 2, par une liaison 41.

Par ailleurs, ladite unité de surveillance 6 comporte de plus un moyen de surveillance 42 (relié à la liaison 11) pour vérifier la compatibilité de la trajectoire verticale TV avec des performances réelles de l'aéronef A.

Pour ce faire, ledit moyen de surveillance 42 réalise les opérations suivantes, pour chaque segment rectiligne de la trajectoire verticale TV :
- il détermine une première pente maximale qui représente la pente maximale, à laquelle peut voler l'aéronef A dans les conditions courantes de vol avec un moteur en panne ;
- il détermine une seconde pente maximale qui représente la pente maximale, à laquelle peut voler l'aéronef A dans les conditions courantes de vol avec tous ses moteurs en fonctionnement. De préférence, il détermine lesdites première et seconde pentes maximales à partir de la pente totale courante de l'aéronef A ;
- il détermine une pente de consigne permettant à l'aéronef A de voler suivant ladite trajectoire de vol TO ; et
- il vérifie que ladite pente de consigne est compatible avec lesdites première et seconde pentes maximales.

Par ailleurs, ladite unité de surveillance 6 comporte de plus un moyen de surveillance 43 (relié à la liaison 12) pour détecter toute déviation (latérale et/ou verticale) excessive de la position de l'aéronef A par rapport à ladite trajectoire de vol TO.

Le dispositif 1 conforme à l'invention comporte donc une pluralité de moyens de surveillance 16, 17, 25, 26, 42, 43 mettant en oeuvre des fonctions de surveillance qui participent toutes, à leur niveau, au maintien de l'intégrité de l'aéronef A lors d'un vol à basse altitude. Ledit dispositif 1 permet donc la mise en oeuvre d'une fonction de surveillance :
- qui est globale et permet de supprimer les risques potentiels de collision de l'aéronef A avec le terrain survolé ; et
- qui est autonome, de sorte qu'elle est très discrète et donc pas facilement détectable (puisqu'elle n'émet pas de rayonnement à la différence d'un radar par exemple).

Dans un mode de réalisation particulier, ledit dispositif 1 comporte de plus un moyen (intégré et non représenté) pour mettre en oeuvre une fonction de sécurisation de la trajectoire de vol lors de sa construction.

Ledit moyen 3 détermine la trajectoire verticale TV (ou profil de vol) de la trajectoire de vol TO, non pas directement à partir d'un profil de terrain qui est par exemple issu d'une base de données numérique et qui présente une certaine marge d'erreur, mais à partir d'un profil de terrain sécurisé qui tient compte d'une pluralité de marges d'erreur ou incertitudes existantes, dont celle relative à la précision de la base de données. Ceci permet d'obtenir une trajectoire verticale TV éliminant tout risque de collision de l'aéronef A avec le sol, tout en autorisant un suivi du terrain 2 à basse altitude. Pour ce faire, ledit moyen 3 détermine, à partir du profil de terrain reçu de la base de données numérique, un profil de terrain sécurisé qui est tel que, le long de ladite trajectoire latérale TL, on prend en compte comme élévation du terrain, l'élévation qui est la plus haute sous la surface d'incertitude (ou surface d'extraction d'un profil de terrain sécurisé) de manière à former un profil auxiliaire auquel on ajoute une hauteur de garde prédéterminée, par exemple 500 pieds (environ 1 50 mètres), pour obtenir ledit profil de terrain sécurisé. Ladite surface d'incertitude dépend d'une marge d'erreur concernant la position de l'aéronef, d'une marge d'erreur concernant ledit profil de terrain, et d'une marge d'erreur concernant le guidage de l'aéronef le long d'une trajectoire. De plus, avantageusement, ladite surface d'incertitude est centrée par rapport à la trajectoire latérale de la trajectoire de vol.

## Revendications

1. Procédé de sécurisation d'un vol à basse altitude d'un aéronef (A) qui est guidé le long d'une trajectoire de vol (TO), comprenant une trajectoire latérale (TL) et une trajectoire verticale (TV), procédé selon lequel :
- on détermine des conditions de vol courantes ;
- on réalise, à l'aide desdites conditions de vol courantes, une fonction de surveillance globale et autonome dudit vol à basse altitude de l'aéronef (A), permettant de conserver l'intégrité dudit aéronef (A) lors dudit vol ; et
- on présente à un opérateur les résultats de la fonction de surveillance ainsi réalisée,
**caractérisé en ce que,** pour réaliser ladite fonction de surveillance, on réalise une surveillance pour vérifier la compatibilité d'une trajectoire verticale (TV) pré-calculée avec des performances théoriques mises à jour de l'aéronef (A), et **en ce que**, pour réaliser cette surveillance :
- on forme, à l'aide de paramètres de calcul concernant l'aéronef (A) et de paramètres extérieurs qui sont mesurés et remis à jour en permanence, un profil de protection (27) qui dépend de la capacité de l'aéronef (A) à effectuer une ressource à vitesse et facteur de charge constants, puis une montée à vitesse constante et à pente maximale ;
- on projette sur la trajectoire verticale (TV) ce profil de protection (27) à partir de la position courante (P1, P2, P3) de l'aéronef (A), en aval, le long de ladite trajectoire verticale (TV) ; et
- on vérifie si ledit profil de protection (27) ainsi projeté intercepte ladite trajectoire verticale (TV), et on émet un signal pour avertir le pilote lorsque ledit profil de protection (27) intercepte ladite trajectoire verticale (TV).

2. Procédé selon la revendication 1,
**caractérisé en ce que,** pour réaliser ladite fonction de surveillance, on réalise une première surveillance pour vérifier la compatibilité de la trajectoire de vol (TO) avec le terrain à survoler.

3. Procédé selon la revendication 2,
**caractérisé en ce que,** pour réaliser ladite première surveillance, on vérifie que la trajectoire verticale (TV) de la trajectoire de vol (TO), translatée verticalement vers le bas d'une hauteur de garde prédéterminée, n'intercepte pas le terrain (4).

4. Procédé selon la revendication 3,
**caractérisé en ce que**, pour réaliser ladite première surveillance, on effectue pour chaque abscisse curviligne de la trajectoire latérale (TL) de la trajectoire de vol (TO), les opérations suivantes :
- on détermine l'altitude la plus élevée sous une surface d'incertitude liée à ladite abscisse curviligne ;
- on augmente cette altitude de ladite hauteur de garde pour former une altitude de sécurité ; et
- on vérifie que l'altitude de ladite abscisse curviligne est supérieure à ladite altitude de sécurité.

5. Procédé selon l'une quelconque des revendications précédentes,
**caractérisé en ce que,** pour réaliser ladite fonction de surveillance, on réalise une deuxième surveillance pour vérifier que ladite trajectoire de vol (TO) est continue et manoeuvrable par l'aéronef (A).

6. Procédé selon la revendication 5,
**caractérisé en ce que,** pour réaliser ladite deuxième surveillance, on effectue, pour chaque abscisse curviligne de la trajectoire latérale (TL) de la trajectoire de vol (TO), les opérations suivantes :
- on détermine les rayons de courbure latéral et vertical correspondant respectivement à la trajectoire latérale (TL) et à la trajectoire verticale (TV), à ladite abscisse curviligne ;
- on détermine à partir de ces rayons de courbure latéral et vertical :
. un premier facteur de charge correspondant à un facteur de charge statique dû à un virage à pente constante ; et
. un second facteur de charge correspondant à un facteur de charge vertical dû à une transition verticale à route constante ; et
- on vérifie que lesdits premier et second facteurs de charge restent inférieurs à des valeurs maximales prédéterminées.

7. Procédé selon l'une quelconque des revendications précédentes,
**caractérisé en ce que,** pour réaliser ladite fonction de surveillance, on réalise une troisième surveillance pour vérifier que la poussée de l'aéronef (A) nécessaire au maintien de la pente et de la vitesse de consigne telles que définies pour la trajectoire de vol (TO), reste inférieure à la poussée maximale disponible en cas de panne d'un moteur de l'aéronef (A).

8. Procédé selon l'une quelconque des revendications 1 à 7,
**caractérisé en ce que,** lorsque ladite surveillance détecte une incompatibilité de la trajectoire verticale (TV) pré-calculée avec les performances théoriques mises à jour de l'aéronef (A), on corrige automatiquement la trajectoire verticale (TV) à l'avant de l'aéronef (A) de manière à supprimer cette incompatibilité.

9. Procédé selon l'une quelconque des revendications précédentes,
**caractérisé en ce que**, pour réaliser ladite fonction de surveillance, on réalise une cinquième surveillance pour vérifier la compatibilité de la trajectoire verticale (TV) avec des performances réelles de l'aéronef (A).

10. Procédé selon la revendication 9,
**caractérisé en ce que,** pour réaliser ladite cinquième surveillance :
- on détermine une première pente maximale qui représente la pente maximale à laquelle peut voler l'aéronef (A) dans les conditions courantes de vol avec un moteur en panne ;
- on détermine une seconde pente maximale qui représente la pente maximale à laquelle peut voler l'aéronef (A) dans les conditions courantes de vol avec tous ses moteurs en fonctionnement ;
- on détermine une pente de consigne permettant à l'aéronef (A) de voler suivant ladite trajectoire de vol (TO) ; et
- on vérifie que ladite pente de consigne est compatible avec lesdites première et seconde pentes maximales.

11. Procédé selon la revendication 10,
**caractérisé en ce que** l'on détermine lesdites première et seconde pentes maximales à partir de la pente totale courante de l'aéronef (A).

12. Procédé selon l'une quelconque des revendications précédentes,
**caractérisé en ce que,** pour réaliser ladite fonction de surveillance, on réalise une sixième surveillance pour détecter toute déviation excessive de la position de l'aéronef (A) par rapport à ladite trajectoire de vol (TO).

13. Procédé selon l'une quelconque des revendications précédentes,
**caractérisé en ce que** lesdites conditions courantes du vol comportent les conditions météorologiques courantes et des caractéristiques courantes de l'aéronef (A).

14. Procédé selon l'une quelconque des revendications précédentes,
**caractérisé en ce que** l'on met en oeuvre une fonction de sécurisation de la trajectoire de vol (TO) lors de sa construction.

15. Dispositif de sécurisation d'un vol à basse altitude d'un aéronef (A) qui est guidé le long d'une trajectoire de vol (TO), ledit dispositif (1) comportant :
- des sources d'informations (5) susceptibles de déterminer des conditions de vol courantes ;
- une unité de surveillance (6) pour réaliser, à l'aide desdites conditions de vol courantes, une fonction de surveillance globale et autonome dudit vol à basse altitude de l'aéronef (A), permettant de conserver l'intégrité dudit aéronef (A) lors dudit vol ; et
- des moyens (13) pour présenter à un opérateur les résultats de la fonction de surveillance réalisée par ladite unité de surveillance (6),
**caractérisé en ce que** ladite unité de surveillance (6) comporte un moyen de surveillance (26) pour vérifier la compatibilité d'une trajectoire verticale (TV) pré-calculée avec des performances théoriques mises à jour de l'aéronef (A), et **en ce que** ce moyen de surveillance (26) comporte pour réaliser cette surveillance :
- un moyen pour former, à l'aide de paramètres de calcul concernant l'aéronef (A) et de paramètres extérieurs qui sont mesurés et remis à jour en permanence, un profil de protection (27) qui dépend de la capacité de l'aéronef (A) à effectuer une ressource à vitesse et facteur de charge constants, puis une montée à vitesse constante et à pente maximale ;
- un moyen pour projeter sur la trajectoire verticale (TV) ce profil de protection (27) à partir de la position courante (P1, P2, P3) de l'aéronef (A), en aval, le long de ladite trajectoire verticale (TV) ; et
- un moyen pour vérifier si ledit profil de protection (27) ainsi projeté intercepte ladite trajectoire verticale (TV) et pour émettre un signal avertissant le pilote lorsque ledit profil de protection (27) intercepte ladite trajectoire verticale (TV).

16. Dispositif selon la revendication 15,
**caractérisé en ce que** ladite unité de surveillance (6) comporte, de plus :
- un premier moyen de surveillance (16) pour vérifier la compatibilité de la trajectoire de vol (TO) avec le terrain à survoler ;
- un deuxième moyen de surveillance (17) pour vérifier que ladite trajectoire de vol (TO) est continue et manoeuvrable par l'aéronef (A) ;
- un troisième moyen de surveillance (25) pour vérifier que la poussée de l'aéronef (A) nécessaire au maintien de la pente et de la vitesse de consigne telles que définies pour la trajectoire de vol (TO), reste inférieure à la poussée maximale disponible en cas de panne d'un moteur de l'aéronef (A) ;
- un cinquième moyen de surveillance (42) pour vérifier la compatibilité de la trajectoire verticale (TV) avec des performances réelles de l'aéronef (A) ; et
- un sixième moyen de surveillance (43) pour détecter toute déviation excessive de la position de l'aéronef (A) par rapport à ladite trajectoire de vol (TO).

17. Dispositif selon l'une des revendications 15 et 16,
**caractérisé en ce qu'**il comporte, de plus, des moyens (38) pour mettre à jour automatiquement ladite trajectoire de vol (TO).

18. Dispositif selon l'une des revendications 15 à 17,
**caractérisé en ce qu'**il comporte, de plus, un moyen pour mettre en oeuvre une fonction de sécurisation de la trajectoire de vol (TO) lors de sa construction.

19. Aéronef,
**caractérisé en ce qu'**il comporte un dispositif (1) tel que celui spécifié sous l'une quelconque des revendications 15 à 18.

## Claims

1. A method of ensuring the safety of a low-altitude flight of an aircraft(A) which is guided along a flight trajectory (TO), comprising a lateral trajectory (TL) and a vertical trajectory (TV), method according to which:
- current flight conditions are determined;
- a function for global and autonomous monitoring of said low-altitude flight of the aircraft (A) is realized, with the aid of said current flight conditions, making it possible to preserve the integrity of said aircraft (A) during said flight; and
- the results of the monitoring function thus realized are presented to an operator,
**characterized in that,** to realize said monitoring function, a monitoring is realized so as to verify the compatibility of a precomputed vertical trajectory (TV) with updated theoretical performance of the aircraft (A), and **in that**, to realize said monitoring:
- a protection profile (27) which depends on the capacity of the aircraft (A) to perform a resource at constant speed and constant load factor,then a climb at constant speed and at maximum slope, is formed, with the aid of computation parameters relating to the aircraft (A) and of exterior parameters, which are measured and updated continually;
- this protection profile (27) is projected onto the vertical trajectory (TV) from the current position (P1, P2, P3) of the aircraft (A), downstream, along said vertical trajectory (TV); and
- a check is carried out to verify if said protection profile (27) thus projected intercepts said vertical trajectory (TV), and a signal to warn the pilot is emitted when the protection profile (27) intercepts said vertical trajectory (TV).

2. The method as claimed in claim 1,
**characterized in that,** to realize said monitoring function, a first monitoring is realized so as to verify the compatibility of the flight trajectory (TO) with the terrain to be overflown.

3. The method as claimed in claim 2,
**characterized in that** said first monitoring consists in verifying that the vertical trajectory (TV) of the flight trajectory (TO), translated vertically downward by a predetermined guard height, does not intercept the terrain (4).

4. The method as claimed in claim 3,
**characterized in that,** to realize said first monitoring, the following operations are performed for each curvilinear abscissa of the lateral trajectory (TO) of the flight trajectory (TO):
- the highest altitude under an uncertainty surface related to said curvilinear abscissa is determined;
- this altitude is increased by said guard height so as to form a safety altitude; and
- a check is carried out to verify that the altitude of said curvilinear abscissa is greater than said safety altitude.

5. The method as claimed in any one of the preceding claims,
**characterized in that,** to realize said monitoring function, a second monitoring is realized so as to verify that said flight trajectory (TO) is continuous and maneuverable by the aircraft (A).

6. The method as claimed in claim 5,
**characterized in that,** to realize said second monitoring, the following operations are performed for each curvilinear abscissa of the lateral trajectory (TL) of the flight trajectory (TO):
- the lateral and vertical radii of curvature corresponding respectively to the lateral trajectory (TL) and to the vertical trajectory (TV) are determined at said curvilinear abscissa;
- on the basis of these lateral and vertical radii of curvature are determined:
. a first load factor corresponding to a static load factor due to a turn at constant slope; and
. a second load factor corresponding to a vertical load factor due to a vertical transition at constant course; and
- a check is carried out to verify that said first and second load factors remain less than predetermined maximum values.

7. The method as claimed in any one of the preceding claims,
**characterized in that,** to realize said monitoring function, a third monitoring is realized so as to verify that the thrust of the aircraft (A) required to maintain the slope and the preset speed such as they are defined for the flight trajectory (TO), remains less than the maximum thrust available in the case of a fault with an engine of the aircraft (A).

8. The method as claimed in any one of claims 1 to 7,
**characterized in that,** when said monitoring detects an incompatibility of the precomputed vertical trajectory (TV) with the updated theorical performance of the aircraft, the vertical trajectory (TV) is automatically corrected ahead of the aircraft (A) in such a way as to eliminate this incompatibility.

9. The method as claimed in any one of the preceding claims,
**characterized in that,** to realize said monitoring function, a fifth monitoring is realized so as to verify the compatibility of the vertical trajectory (TV) with actual performance of the aircraft (A).

10. The method as claimed in claim 9,
**characterized in that,** to realize said fifth monitoring:
- a first maximum slope is determined which represents the maximum slope at which the aircraft (A) can fly under the current flight conditions with a faulty engine;
- a second maximum slope is determined which represents the maximum slope at which the aircraft (A) can fly under the current flight conditions with all its engines operational;
- a preset slope is determined allowing the aircraft (A) to fly along said flight trajectory (TO); and
- a check is carried out to verify that said preset slope is compatible with said first and second maximum slopes.

11. The method as claimed in claim 10,
**characterized in that** said first and second maximum slopes are determined from the current total slope of the aircraft (A).

12. The method as claimed in any one of the preceding claims,
**characterized in that,** to realize said monitoring function, a sixth monitoring is realized so as to detect any excessive deviation of the position of the aircraft (A) with respect to said flight trajectory (TO).

13. The method as claimed in any one of the preceding claims,
**characterized in that** said current flight conditions comprise the current meteorological conditions and current characteristics of the aircraft (A).

14. The method as claimed in any one of the preceding claims,
**characterized in that** a function for ensuring the safety of the flight trajectory (TO) during its construction is implemented.

15. A device for ensuring the safety of a low-altitude flight of an aircraft (A) which is guided along a flight trajectory (TO), said device (1) comprising,
- information sources (5) able to determine current flight conditions;
- a monitoring unit (6) for realizing, with the aid of said current flight conditions, a function for global and autonomous monitoring of said low-altitude flight of the aircraft (A), making it possible to preserve the integrity of said aircraft (A) during said flight; and
- means (13) for presenting the results of the monitoring function realized by said monitoring unit (6) to an operator,
**characterized in that** said monitoring unit (6) comprises a monitoring means (26) for verifying the compatibility of a precomputed vertical trajectory (TV) with updated theoretical performance of the aircraft (A), and **in that** this monitoring means (26) includes for realizing this monitoring:
- a means for forming, with the aid of computation parameters relating to the aircraft (A) and of exterior parameters, which are measured and updated continually, a protection profile (27) which depends on the capacity of the aircraft (A) to perform a resource at constant speed and constant load factor, then a climb at constant speed and at maximum slope;
- a means for projecting this protection profile (27) onto the vertical trajectory (TV) from the current position (P1, P2, P3) of the aircraft (A), downstream, along said vertical trajectory (TV); and
- a means for verifying if said protection profile (27) thus projected intercepts said vertical trajectory (TV) and for emitting a signal to warn the pilot when the protection profile (27) intercepts said vertical trajectory (TV).

16. The device as claimed in claim 15,
**characterized in that** said monitoring unit (6) furthermore comprises:
- a first monitoring means (16) for verifying the compatibility of the flight trajectory (TO) with the terrain to be overflown;
- a second monitoring means (17) for verifying that said flight trajectory (TO) is continuous and maneuverable by the aircraft (A);
- a third monitoring means (25) for verifying that the thrust of the aircraft (A) required to maintain the slope and the preset speed such as they are defined for the flight trajectory (TO) remains less than the maximum thrust available in the case of a fault with an engine of the aircraft (A);
- a fifth monitoring means (42) for verifying the compatibility of the vertical trajectory (TV) with actual performance of the aircraft (A); and
- a sixth monitoring means (43) for detecting any excessive deviation of the position of the aircraft (A) with respect to said flight trajectory (TO).

17. The device as claimed in one of claims 15 and 16,
**characterized in that** it furthermore comprises means (38) for automatically updating said flight trajectory (TO).

18. The device as claimed in one of claims 15 to 17,
**characterized in that** it furthermore comprises a means for implementing a function for ensuring the safety of the flight trajectory (TO) during its construction.

19. An aircraft,
**characterized in that** it comprises a device (1) such as that specified under any one of claims 15 to 18.

## Patentansprüche

1. Verfahren zur Sicherung eines Tieffluges eines Flugzeugs (A), das entlang einer Flugbahn (TO) geführt wird, die eine seitliche Flugbahn (TL) und eine vertikale Flugbahn (TV) umfasst, wobei bei dem Verfahren:
- aktuelle Flugbedingungen bestimmt werden,
- mithilfe der aktuellen Flugbedingungen eine Funktion zur globalen und unabhängigen Überwachung des Tieffluges des Flugzeugs (A) ausgeführt wird, die es ermöglicht, die Unversehrtheit des Flugzeugs (A) während des Fluges aufrechtzuerhalten und
- einer Bedienperson die Ergebnisse der so ausgeführten Überwachungsfunktion gezeigt werden,
**dadurch gekennzeichnet, dass** zum Ausführen der Überwachungsfunktion eine Überwachung ausgeführt wird, um die Kompatibilität einer vorausberechneten vertikalen Flugbahn (TV) mit aktualisierten theoretischen Leistungen des Flugzeugs (A) zu verifizieren und **dadurch**, dass zum Ausführen dieser Überwachung:
- mithilfe von Berechnungsparametern bezüglich des Flugzeugs (A) und von äußeren Parametern, die permanent gemessen und aktualisiert werden, ein Schutzprofil (27) gebildet wird, das abhängig ist von der Fähigkeit des Flugzeugs (A), ein Abfangen mit konstanter Geschwindigkeit und konstantem Lastvielfachen und anschließend einen Anstieg mit konstanter Geschwindigkeit und maximaler Steigung durchzuführen,
- dieses Schutzprofil (27) ausgehend von der aktuellen Position (P1, P2, P3) des Flugzeugs (A) abwärts entlang der vertikalen Flugbahn (TV) auf die vertikale Flugbahn (TV) projiziert wird und
- überprüft wird, ob das auf diese Weise projizierte Schutzprofil (27) die vertikale Flugbahn (TV) schneidet und - wenn das Schutzprofil (27) die vertikale Flugbahn (TV) schneidet - ein Signal abgegeben wird, um den Piloten darauf aufmerksam zu machen.

2. Verfahren nach Anspruch 1,
**dadurch gekennzeichnet, dass** zum Ausführen der Überwachungsfunktion eine erste Überwachung ausgeführt wird, um die Kompatibilität der Flugbahn (TO) mit dem zu überfliegenden Gelände zu verifizieren.

3. Verfahren nach Anspruch 2,
**dadurch gekennzeichnet, dass** zum Ausführen der ersten Überwachung verifiziert wird, dass die um eine vorgegebene Schutzhöhe vertikal nach unten verschobene vertikale Flugbahn (TV) der Flugbahn (TO) nicht das Gelände (4) schneidet.

4. Verfahren nach Anspruch 3,
**dadurch gekennzeichnet, dass** zum Ausführen der ersten Überwachung für jede krummlinige Abszisse der seitlichen Flugbahn (TL) der Flugbahn (TO) die folgenden Verfahrensschritte ausgeführt werden:
- die höchste Höhe unter einer mit der krummlinigen Abszisse verbundenen Unsicherheitsfläche wird bestimmt,
- diese Höhe wird zur Bildung einer Sicherheitshöhe um die Schutzhöhe erhöht und
- es wird verifiziert, dass die Höhe der krummlinigen Abszisse höher als die Sicherheitshöhe ist.

5. Verfahren nach einem der vorhergehenden Ansprüche,
**dadurch gekennzeichnet, dass** zum Ausführen der Überwachungsfunktion eine zweite Überwachung ausgeführt wird, um zu verifizieren, dass die Flugbahn (TO) kontinuierlich und von dem Flugzeug (A) steuerbar ist.

6. Verfahren nach Anspruch 5,
**dadurch gekennzeichnet, dass** zum Ausführen der zweiten Überwachung für jede krummlinige Abszisse der seitlichen Flugbahn (TL) der Flugbahn (TO) die folgenden Verfahrensschritte ausgeführt werden:
- der zur seitlichen Flugbahn (TL) gehörige laterale Krümmungsradius und der zur vertikalen Flugbahn (TV) gehörige vertikale Krümmungsradius an der krummlinigen Abszisse werden bestimmt,
- ausgehend von diesem lateralen und diesem vertikalen Krümmungsradius wird Folgendes bestimmt:
• ein erstes Lastvielfaches, das einem statischen Lastvielfachen aufgrund einer Kurve mit konstanter Steigung entspricht und
• ein zweites Lastvielfaches, das einem vertikalen Lastvielfachen aufgrund eines vertikalen Übergangs bei konstantem Kurs entspricht und
- es wird verifiziert, dass das erste und das zweite Lastvielfache unter vorgegebenen Maximalwerten bleiben.

7. Verfahren nach einem der vorhergehenden Ansprüche,
**dadurch gekennzeichnet, dass** zum Ausführen der Überwachungsfunktion eine dritte Überwachung ausgeführt wird, um zu verifizieren, dass der Schub des Flugzeugs (A), der erforderlich ist, um die Steigung und die Sollgeschwindigkeit, wie sie für die Flugbahn (TO) definiert sind, aufrechtzuerhalten, unter dem im Falle des Ausfalls eines Motors des Flugzeugs (A) verfügbaren Maximalschub bleibt.

8. Verfahren nach einem der Ansprüche 1 bis 7,
**dadurch gekennzeichnet, dass,** wenn die Überwachung eine Unvereinbarkeit der vorausberechneten vertikalen Flugbahn (TV) mit der aktualisierten theoretischen Leistungsfähigkeit des Flugzeugs (A) detektiert, die vertikale Flugbahn (TV) vor dem Flugzeug (A) automatisch korrigiert wird, so dass diese Unvereinbarkeit beseitigt wird.

9. Verfahren nach einem der vorhergehenden Ansprüche,
**dadurch gekennzeichnet, dass** zum Ausführen der Überwachungsfunktion eine fünfte Überwachung ausgeführt wird, um die Kompatibilität der vertikalen Flugbahn (TV) mit tatsächlichen Leistungen des Flugzeugs (A) zu verifizieren.

10. Verfahren nach Anspruch 9,
**dadurch gekennzeichnet, dass** zum Ausführen der fünften Überwachung:
- eine erste maximale Steigung bestimmt wird, welche die maximale Steigung darstellt, mit der das Flugzeug (A) unter den aktuellen Flugbedingungen mit einem fehlerhaften Motor fliegen kann,
- eine zweite maximale Steigung bestimmt wird, welche die maximale Steigung darstellt, mit der das Flugzeug (A) unter den aktuellen Flugbedingungen fliegen kann, wenn alle seine Motoren in Betrieb sind,
- eine Sollsteigung bestimmt wird, die es dem Flugzeug (A) ermöglicht, der Flugbahn (TO) folgend zu fliegen und
- verifiziert wird, dass die Sollsteigung mit der ersten und zweiten maximalen Steigung vereinbar ist.

11. Verfahren nach Anspruch 10,
**dadurch gekennzeichnet, dass** die erste und die zweite maximale Steigung ausgehend von der aktuellen Gesamtsteigung des Flugzeugs (A) bestimmt werden.

12. Verfahren nach einem der vorhergehenden Ansprüche,
**dadurch gekennzeichnet, dass** zum Ausführen der Überwachungsfunktion eine sechste Überwachung ausgeführt wird, um jede übermäßige Abweichung der Position des Flugzeugs
(A) bezogen auf die Flugbahn (TO) zu detektieren.

13. Verfahren nach einem der vorhergehenden Ansprüche,
**dadurch gekennzeichnet, dass** die aktuellen Flugbedingungen die aktuellen Witterungsbedingungen und aktuelle Kenndaten des Flugzeugs (A) umfassen.

14. Verfahren nach einem der vorhergehenden Ansprüche,
**dadurch gekennzeichnet, dass** eine Funktion zur Sicherung der Flugbahn (TO) während ihrer Erzeugung ausgeführt wird.

15. Vorrichtung zur Sicherung eines Tieffluges eines Flugzeugs (A), das entlang einer Flugbahn (TO) geführt wird, wobei die Vorrichtung (1) Folgendes umfasst:
- Informationsquellen (5), die zur Bestimmung aktueller Flugbedingungen geeignet sind,
- eine Überwachungseinheit (6), um mithilfe der aktuellen Flugbedingungen eine Funktion zur globalen und unabhängigen Überwachung des Tieffluges des Flugzeugs (A) auszuführen, die es ermöglicht, die Unversehrtheit des Flugzeugs (A) während des Fluges aufrechtzuerhalten und
- Mittel (13), um einer Bedienperson die Ergebnisse der von der Überwachungseinheit (6) ausgeführten Überwachungsfunktion anzuzeigen,
**dadurch gekennzeichnet, dass** die Überwachungseinheit (6) ein Überwachungsmittel (26) umfasst, um die Kompatibilität einer vorausberechneten vertikalen Flugbahn (TV) mit aktualisierten theoretischen Leistungen des Flugzeugs (A) zu verifizieren und **dadurch**, dass dieses Überwachungsmittel (26) zum Ausführen dieser Überwachung Folgendes umfasst:
- ein Mittel, um mithilfe von Berechnungsparametern bezüglich des Flugzeugs (A) und von äußeren Parametern, die permanent gemessen und aktualisiert werden, ein Schutzprofil (27) zu bilden, das abhängig ist von der Fähigkeit des Flugzeugs (A), ein Abfangen mit konstanter Geschwindigkeit und konstantem Lastvielfachen und anschließend einen Anstieg mit konstanter Geschwindigkeit und maximaler Steigung durchzuführen,
- ein Mittel, um dieses Schutzprofil (27) ausgehend von der aktuellen Position (P1, P2, P3) des Flugzeugs (A) abwärts entlang der vertikalen Flugbahn (TV) auf die vertikale Flugbahn (TV) zu projizieren und
- ein Mittel, um zu prüfen, ob das auf diese Weise projizierte Schutzprofil (27) die vertikale Flugbahn (TV) schneidet und - wenn das Schutzprofil (27) die vertikale Flugbahn (TV) schneidet - ein Signal abzugeben, das den Piloten darauf aufmerksam macht.

16. Vorrichtung nach Anspruch 15,
**dadurch gekennzeichnet, dass** die Überwachungseinheit (6) außerdem Folgendes umfasst:
- ein erstes Überwachungsmittel (16), um die Kompatibilität der Flugbahn (TO) mit dem zu überfliegenden Gelände zu verifizieren,
- ein zweites Überwachungsmittel (17), um zu verifizieren, dass die Flugbahn (TO) kontinuierlich und von dem Flugzeug (A) steuerbar ist,
- ein drittes Überwachungsmittel (25), um zu verifizieren, dass der Schub des Flugzeugs (A), der erforderlich ist, um die Steigung und die Sollgeschwindigkeit, wie sie für die Flugbahn (TO) definiert sind, aufrechtzuerhalten, unter dem im Falle des Ausfalls eines Motors des Flugzeugs (A) verfügbaren Maximalschub bleibt,
- ein fünftes Überwachungsmittel (42), um die Kompatibilität der vertikalen Flugbahn (TV) mit tatsächlichen Leistungen des Flugzeugs (A) zu verifizieren und
- ein sechstes Überwachungsmittel (43), um jede übermäßige Abweichung der Position des Flugzeugs (A) bezogen auf die Flugbahn (TO) zu detektieren.

17. Vorrichtung nach Anspruch 15 oder 16,
**dadurch gekennzeichnet, dass** sie zusätzlich Mittel (38) zum automatischen Aktualisieren der Flugbahn (TO) umfasst.

18. Vorrichtung nach einem der Ansprüche 15 bis 17,
**dadurch gekennzeichnet, dass** sie außerdem ein Mittel zum Ausführen einer Funktion zur Sicherung der Flugbahn (TO) während ihrer Erzeugung umfasst.

19. Flugzeug,
**dadurch gekennzeichnet, dass** es eine Vorrichtung (1) wie die unter einem der Ansprüche 15 bis 18 spezifizierte aufweist.
